# EUROPÄISCHE PATENTSCHRIFT

(11) **EP 0 504 166 B1**
(45) Veröffentlichungstag und Bekanntmachung des Hinweises auf die Patenterteilung: **11.08.1993**
(21) Anmeldenummer: 90917234.8
(22) Anmeldetag: 30.11.1990
(51) Int. Cl.: B60K 25/00, B60L 11/00

(54) **FAHRZEUG MIT ZWEI ACHSEN**
TWIN-AXLE VEHICLE
VEHICULE A DEUX ESSIEUX

(30) Priorität: 05.12.1989 DE 3940172
(43) Veröffentlichungstag der Anmeldung: 23.09.1992
(73) Patentinhaber: AUDI AG, 85045 Ingolstadt (DE)
(72) Erfinder: HEIDL, Roland, D-8071 Lenting (DE); HASLER, Franz, D-8071 Wettstetten (DE)
(74) Vertreter: Le Vrang, Klaus
(86) Internationale Anmeldenummer: EP9002059
(87) Internationale Veröffentlichungsnummer: WO9108123

(56) Entgegenhaltungen:
- DE-A- 3 009 503
- US-A- 4 180 138
- PATENT ABSTRACTS OF JAPAN, Band 7, Nr. 221, M246, 11. Juli 1983
- PATENT ABSTRACTS OF JAPAN, Band 7, N. 223, M247, 14. Juli 1983

## Beschreibung

Die Erfindung betrifft ein Hybridfahrzeug gemäß Oberbegriff des Anspruchs 1.

Ein derartiges Fahrzeug ist aus der DE-A 30 09 503 bekannt. Das dort beschriebene Hybridfahrzeug, daß entweder mit einem Hauptmotor, der als Elektromotor ausgebildet ist, oder mit einem Hilfsantriebsmotor, der als Brennkraftmaschine ausgelegt ist, betrieben wird, besitzt zusätzlich einen zweiten Elektromotor für die Hilfsaggregate, der über eine erste Riemenscheibe mit dem Hauptelektromotor und über eine zweite Riemenscheibe mit einer Brennkraftmaschine verbunden ist. Der zweite Elektromotor stellt eine Mindestenergie für die Hilfsaggregate sicher, die Energie wird jedoch unter normalen Bedingungen von dem Hauptelektromotor oder der Brennkraftmaschine geliefert.

Weitere Hybridfahrzeuge sind aus der DE-A 29 29 497 oder der EP-A 0 004 104 bekannt. Derartige Hybridautos besitzen zusätzlich zu der Brennkraftmaschine einen Elektromotor, wobei entweder der Elektromotor zugeschaltet werden kann, wenn eine bessere Traktion erwünscht ist und damit ein Allradantrieb als Anfahrhilfe erzeugt wird, oder es wird auf ausschließlichen Elektrobetrieb umgeschaltet, wenn der Betrieb mit Brennkraftmaschine unerwünscht ist, z. B. aus Abgasgründen. Auch die Geräuschbelästigung ist bei dem Betrieb mit Elektromotor stark vermindert.

Weiterhin ist es aus der DE-A 23 09 680 bekannt, die Hilfsantriebe für die Aufrechterhaltung der Servofunktionen, wie beispielsweise Bremskraftverstärker, Servolenkung und ähnliche Betriebshilfen, über den Elektromotor anzusteuern. Dazu sind jedoch weitere Keilriemenverbindungen notwendig, was zu einem komplizierteren Aufbau führt. Insbesondere bei den gattungsgemäßen Auslegungen, nämlich eine Zuordnung der Brennkraftmaschine zu der vorderen Achse, während der Elektromotor zu der hinteren Achse zugeordnet wird, sind die beiden Motoren, Brennkraftmaschine und Elektromotor, räumlich so weit voneinander getrennt, daß die Aufrechterhaltungen der Servofunktionen einen erheblichen Bauaufwand bedeutet.

Die gattungsgemäße DE-A 30 09 503 schlägt zur Aufrechterhaltung der Servofunktionen die Bereitstellung eines zweiten Elektromotors vor.

Aufgabe der Erfindung ist es, die eingesetzten Komponenten optimal zu verwenden.

Dazu ist erfindungsgemäß vorgesehen, daß der zweite Elektromotor, der zum Antrieb der zusätzlichen Aggregate während des Elektrobetriebes dient, bei Betrieb durch die Brennkraftmaschine angetrieben wird, jedoch als Generator geschaltet wird zur Aufladung der Akkumulatoren.

Im weiteren werden einige Aspekte der Erfindung anhand der Zeichnugn näher erläutert. Es zeigen:
- Fig. 1: eine Seitenansicht des erfindungsgemäßen Fahrzeuges;
- Fig. 2: die Darstellung der Hinterachse des erfindungsgemäßen Fahrzeuges;
- Fig. 3: den Antrieb der Servopumpe für das erfindungsgemäße Fahrzeug;
- Fig. 4: die Darstellung des Antriebes der Servopumpe in Verbindung mit der Brennkraftmaschine;
- Fig. 5: schematisch die Verbindung zwischen Kurbelwelle, Servopumpe und Servomotor.

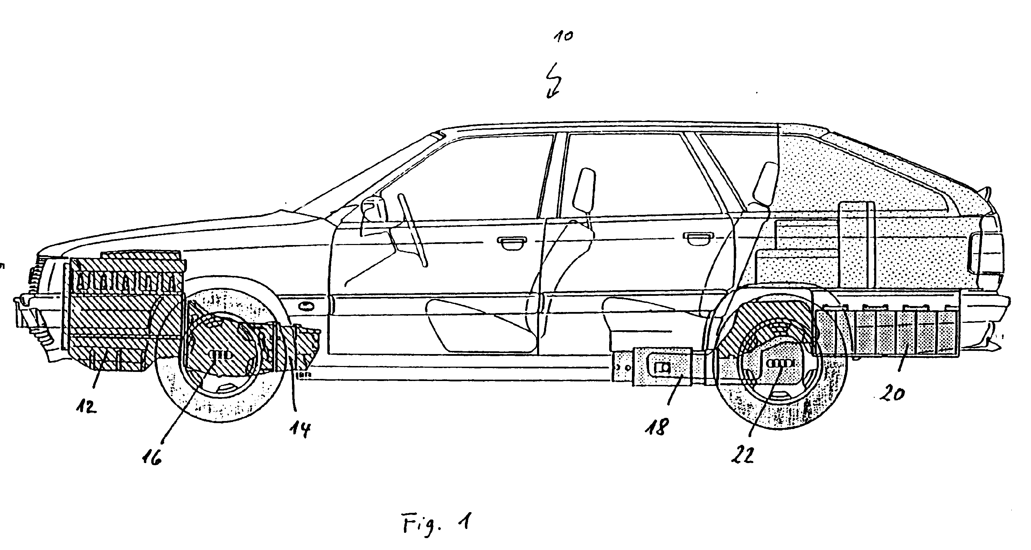

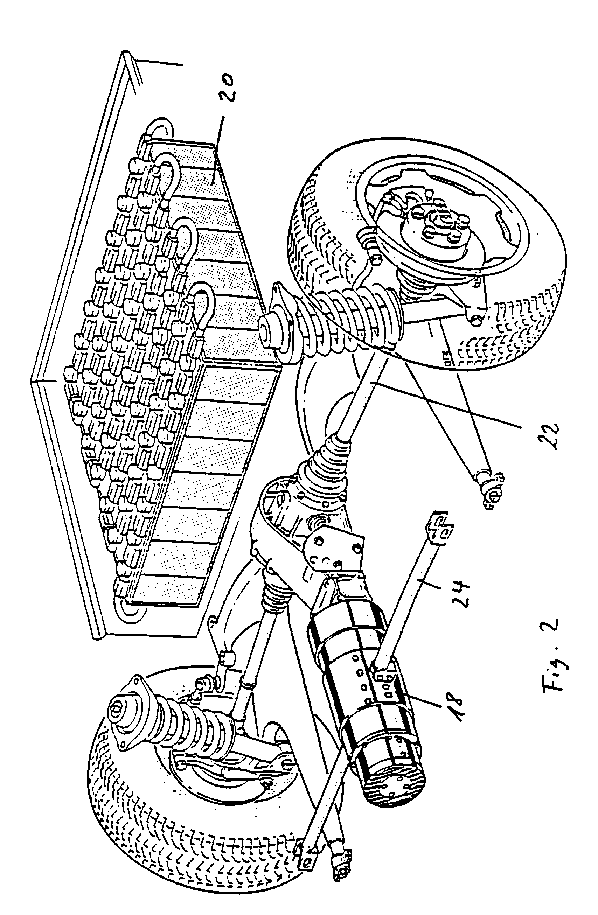

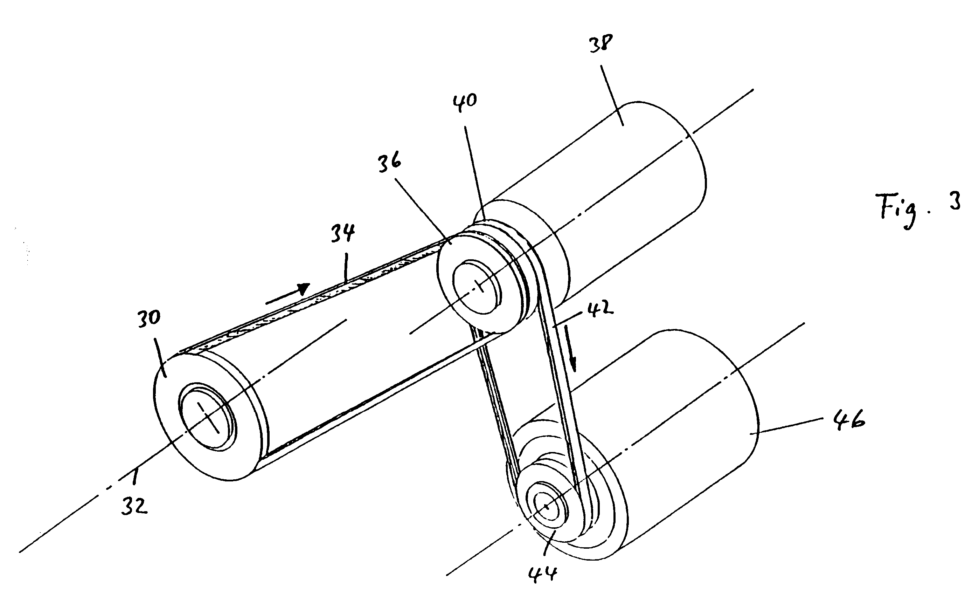

In Fig. 1 ist die Seitenansicht des Hybridfahrzeuges 10 dargestellt, das im vorderen Motorraum eine Brennkraftmaschine 12 mit einem daran angeflanschten Getriebe 14 besitzt. Die Motor-Getriebe-Einheit 12 und 14 treibt die Vorderachse 16 an.

An der Hinterachse ist ein Elektromotor 18 vorgesehen, der über einen eigenen Satz von Akkumulatoren 20 mit Strom versorgt wird. Der Elektromotor 18 treibt die Hinterachse 22 an.

Der Hinterachsaufbau ist in Figur 2 detailliert dargestellt, der Elektromotor 18, versorgt aus den Akkumulatoren 20, treibt über ein Differential die Antriebswellen 22 an.

Mit 24 sind die entsprechenden Halterungen für den Elektromotor 18 dargestellt, die den Elektromotor 18 in geeigneter Weise am Rahmen aufhängen, so daß er die auf die Hinterachse einwirkenden Stöße in entsprechender Form mitmachen kann.

Figur 3 zeigt die Anordnung zum Antrieb der Servopumpe.

Eine Riemenscheibe 30 wird von der Kurbelwelle der Brennkraftmaschine angetrieben, die Mitte der Kurbelwelle ist mit 32 angedeutet. Die Drehung der Riemenscheibe 30 wird über einen Keilriemen 34 auf eine Riemenscheibe 36 übertragen, die auf der Achse der Servopumpe 38 sitzt und diese antreibt. Die Riemenscheibe 36 besitzt einen Freilauf, so daß die Kraftübertragung von der Riemenscheibe 30 auf die Riemenscheibe 36 die Servopumpe 38 antreibt, wohingegen eine Übertragung von der Riemenscheibe 36 auf die Riemenscheibe 30 aufgrund des Freilaufes nicht möglich ist.

Die Antriebswelle für die Servopumpe 38 besitzt eine weitere Riemenscheibe 40, die über einen Keilriemen 42 mit einer Riemenscheibe 44 eines Elektromotors 46 verbunden ist.

Wenn das Hybridfahrzeug 10 nun im Elektromotorbetrieb, also mit stillgelegter Brennkraftmaschine 12, betrieben wird, wird über den Elektromotor 46 und den Keilriemen 42 die Riemenscheibe 40 angetrieben und somit die Servopumpe 38 zur Erhaltung der Funktion der Servolenkung und der Bremskraftverstärkung angetrieben.

Dabei ist vorgesehen, daß auch bei Betrieb der Brennkraftmaschine der Motor 46 mitläuft über die Keilriemen 34 und 42, nur wird dann der Elektromotor 46 als Generator geschaltet und verwendet, um die Akkumulatoren 20 wieder aufzuladen.

Die Aufladung der Akkumulatoren 20 kann in bevorzugter Weise dadurch geschehen, daß diese in Zellen zu 12 Volt aufgeteilt werden, die parallel geschaltet :sind und dementsprechend mit einer Spannung von 12 Volt aufgeladen werden.

Bei Antrieb des Elektromotors 18 über die Akkumulatoren 20 werden fünf solche Zellen hintereinandergeschaltet um eine Betriebsspannung von 60 Volt zu erreichen, die an den Elektromotor 18 angelegt werden.

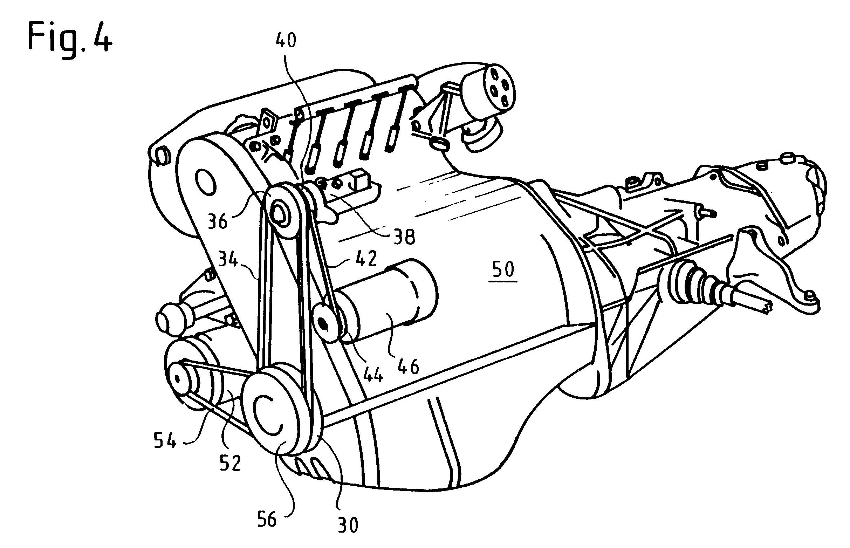

In Figur 4 sind die Elemente Servopumpe und Servomotor/Servogenerator in lagerichtigem Einbau in ihrer Anbringung an der Brennkraftmaschine dargestellt. Mit dem Bezugszeichen 50 ist eine Brennkraftmaschine bezeichnet, deren Kurbelwelle eine erste Riemenscheibe 30 und eine zweite Riemenscheibe 56 dreht. Die Riemenscheibe 56 ist über einen Keilriemen 54 mit der herkömmlichen Lichtmaschine 52 verbunden. Die zweite Riemenscheibe 30 dreht über einen Keilriemen 34 die Riemenscheibe 36 der Servopumpe 38, auf der gleichen Achse sitzt eine zweite Riemenscheibe 40 der Servorpumpe, die über den Keilriemen 42 mit der Riemenscheibe 44 des Elektromotors 46 verbunden ist.

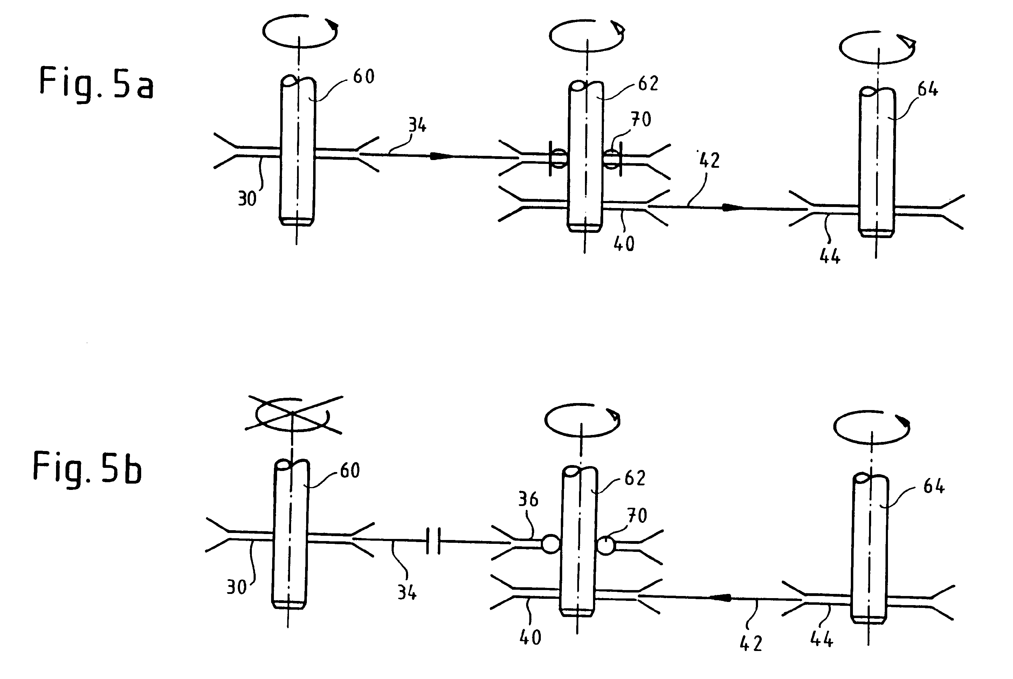

Diese Riemenscheiben und die zugehörigen antreibenden und angetriebenen Wellen sind schematisch zur Erläuterung in den Figuren 5, 6 und 7 nochmals dargestellt.

Figur 5 zeigt einen der Riemenscheibe 36 zugeordneten Freilauf 70, der in Figur 5a gesperrt ist. Dieser Betrieb entspricht dem Betrieb mit Brennkraftmaschine, so daß die der Kurbelwelle zugeordnete Welle 60 über die Riemenscheibe 30 und den Keilriemen 34 die Riemenscheibe 36 antreibt, die bei gesperrtem Freilauf 70 wiederum die Welle 62 der Servopumpe dreht. Der Elektromotor 46 ist gleichzeitig als Generator geschaltet, so daß die ihm zugeordnete Welle 46 über die Riemenscheibe 40, die mit der Welle 62 verbunden ist, und den Keilriemen 42 sowie Riemenscheibe 44 angetrieben wird. Damit wird der Servomotor/Generator 46 als Gernerator betrieben und erzeugt Strom zum Nachladen der Batterieeinheit 20.

In der Betriebsweise gemäß Figur 5b ist der Freilauf 70 nicht gesperrt, so daß zwischen Riemenscheibe 36 und Welle 62 keine Verbindung ist. Diese Betriebsweise entspricht dem Elektrobetrieb, wobei der Servomotor 46, der nunmehr als Motor und nicht als Generator arbeitet, über seine Riemenscheibe 44 und den Keilriemen 42 die Riemenscheibe 40 antreibt, so daß die Servopumpe zur Aufrechterhaltung der Servofunktionen angetrieben ist.

## Patentansprüche

1. Hybridfahrzeug mit einer Brennkraftmaschine und einem Elektromotor zum Antrieb, wobei alternativ das Fahrzeug nur mit Brennkraftmaschine oder nur mit Elektromotor angetrieben wird, und ein zweiter Elektromotor (46) vorgesehen ist, der im Elektrobetrieb die zur Aufrechterhaltung der Servofunktionen notwendigen Aggregate (38) mit Energie versorgt, wobei der zweite Elektromotor (46) genau eine Riemenscheibe (44) zur Übertragung der mechanischen Energie auf die zur Aufrechterhaltung der Servofunktionen notwendigen Aggregate aufweist, dadurch gekennzeichnet, daß das Fahrzeug zwei Achsen besitzt, auf deren eine zum Antrieb die Brennkraftmaschine einwirkt, und deren andere mit Hilfe des Elektromotors angetrieben wird, und bei Betrieb des Fahrzeugs mit Brennkraftmaschine der zweite Elektromotor (46) mitläuft und als Generator zur Wiederaufladung der für die Stromversorgung des Antriebselektromotors (18) vorgesehenen Akkumulatoren (20) eingesetzt wird.

2. Fahrzeug nach Anspruch 1, dadurch gekennzeichnet daß die Aggregate eine Pumpe (38) umfassen, die bei Be trieb über die Brennkraftmaschine (12) mit einem von der Brennkraftmaschine angetriebenen Keilriemen (34) und bei Elektrobetrieb über einen von dem zweiten Elektromotor (46) betriebenen Keilriemen (42) bewegt wird.

3. Fahrzeug nach Anspruch 2, dadurch gekennzeichnet, daß mindestens eine der Keilriemenscheiben (36, 40) für die Pumpe (38) einen Freilauf aufweist.

## Claims

1. Hybrid vehicle powered by a combustion engine and an electric motor, the vehicle being powered alternatively by combustion engine only or by electric motor only, and a second electric motor (46) being provided which during electrical operation supplies energy to the assemblies (38) necessary for maintaining the servo-functions, said second electric motor (46) having precisely one pulley (44) for transmitting the mechanical energy to the assemblies necessary for maintaining the servo-functions, characterised in that the vehicle possesses two axles, one of which is acted upon by the combustion engine to drive it, and the other of which is driven using the electric motor, and while the vehicle is being operated with the combustion engine the second electric motor (46) is also running and is being used as a generator for recharging the batteries (20) provided for supplying current to the driving electric motor (18).

2. Vehicle according to claim 1, characterised in that the assemblies include a pump (38) which during operation by means of the combustion engine (12) is moved by a V-belt (34) driven by the combustion engine and during electrical operation is moved via a V-belt (42) operated by the second electric motor (46).

3. Vehicle according to claim 2, characterised in that at least one of the V-belt pulleys (36, 40) incorporates a free-wheeling mechanism for the pump (38).

## Revendications

1. Véhicule automobile hybride comportant, pour son entraînement, un moteur à combustion interne et un moteur électrique, le véhicule étant alternativement entraîné uniquement par le moteur à combustion interne ou uniquement par le moteur électrique et un second moteur électrique (46) étant prévu pour alimenter en énergie les groupes (38) nécessaires pour le maintien des servofonctions lorsque le véhicule fonctionne électriquement, le second moteur électrique (46) comportant une poulie (44) pour la transmission de l'énergie mécanique aux groupes nécessaires pour le maintien des servofonctions, caractérisé en ce que le véhicule comporte deux essieux, sur l'un desquels le moteur à combustion interne agit pour l'entraînement et dont l'autre est entraîné au moyen du moteur électrique, et en ce que, lorsque le véhicule marche avec le moteur à combustion interne, le second moteur électrique (46) tourne en même temps et est utilisé comme générateur pour la recharge des accumulateurs (20) prévus pour l'alimentation en courant du moteur électrique d'entraînement (18).

2. Véhicule automobile selon la revendication 1, caractérisé en ce que lesdits groupes comprennent une pompe (38) qui est actionnée par une courroie trapézoïdale (34) entraînée par le moteur à combustion interne (12) lorsque le véhicule marche avec ce dernier, et par une courroie trapézoïdale (42) entraînée par le second moteur électrique (46) lorsque le véhicule fonctionne électriquement.

3. Véhicule automobile selon la revendication 2, caractérisé en ce que l'une au moins des poulies à gorge trapézoïdale (36, 40) pour l'entraînement de la pompe (38) présente une roue libre.
